# EUROPÄISCHE PATENTSCHRIFT

(11) **EP 3 586 035 B1**
(45) Veröffentlichungstag und Bekanntmachung des Hinweises auf die Patenterteilung: **01.09.2021**
(21) Anmeldenummer: 18709959.3
(22) Anmeldetag: 27.02.2018
(51) Int. Cl.: F16G 13/16, H02G 11/00

(54) **ENERGIEFÜHRUNGSKETTE UND ROLLENMODUL**
CABLE CARRIER AND ROLLER MODULE
CHAÎNE DE GUIDAGE D'ÉNERGIE ET MODULE À ROULEAUX

(30) Priorität: 27.02.2017 DE 202017101099 U
(43) Veröffentlichungstag der Anmeldung: 01.01.2020
(73) Patentinhaber: Igus GmbH, 51147 Köln (DE)
(72) Erfinder: HOWOLD, Philip, 50226 Frechen (DE); MCCASKILL, Sean, Charlotte North Carolina 28226 (US)
(74) Vertreter: Lippert Stachow Patentanwälte Rechtsanwälte
(86) Internationale Anmeldenummer: PCT/EP2018/054728
(87) Internationale Veröffentlichungsnummer: WO 2018/154129

(56) Entgegenhaltungen:
- DE-A1-102012 113 082
- JP-A- 2010 127 396
- JP-A- 2010 228 904
- US-A- 4 462 565

## Beschreibung

Die Erfindung betrifft eine Energieführungskette zur Aufnahme und Führung von Energie- und Informationsübertragungsleitungen, insbesondere Kabeln und Schläuchen, die parallele, erste Laschenstränge aus gegenüberliegenden ersten Laschen aufweist, wobei die Laschen jedes Laschenstrangs gelenkig miteinander verbunden und zumindest einige der gegenüberliegenden ersten Laschen durch erste Querstege miteinander verbunden sind, und die seitlich außerhalb der ersten Laschenstränge Rollen aufweist, die an einer senkrecht zu den ersten Querstegen weisenden Seite der Energieführungskette über den Laschen vorstehen.

Die Erfindung betrifft weiterhin ein Rollenmodul bestehend aus einer Halterung und darin gelagerten Rolle zur seitlichen lösbaren Befestigung an der Außenseite einer ersten Lasche einer Energieführungskette der vorstehend genannten Art.

Eine Energieführungskette der vorstehend genannten Art kann insbesondere zum Verfahren auf einem Untergrund oder in einer Rinne mit Hilfe der Rollen verwendet werden. Dabei kann ein bewegliches Ende des auf dem Untergrund über die Rollen abgelegten Trums mit einem Fahrzeug verbunden sein, das das bewegliche Ende der Energieführungskette zu einer Station verfährt, an der die Leitungen an einen Energieverbraucher und/oder Informationsempfänger angeschlossen werden können. Das bewegliche freie Ende der Energieführungskette kann auch an einen beweglichen Energieverbraucher und/oder Informationsempfänger angeschlossen sein.

Das auf dem Untergrund über die Rollen aufliegende und verfahrbare Trum kann in einen Speicherbereich zur Speicherung der freizugebenden Länge der Energieführungskette aufgenommen und aus diesem abgegeben werden. Im Speicherbereich kann die freizugebende Länge der Energieführungskette in oder auf einer Art Trommel aufrollbar oder abrollbar sein. Die freizugebende Länge der Energieführungskette kann in einer anderen Anordnung im Speicherbereich schleifenförmig mit mindestens einem Umlenkbogen und einem über dem mit den Rollen auf dem Untergrund aufliegenden Trum angeordneten Obertrum angeordnet sein.

Eine Energieführungskette der eingangs genannten Art ist aus der DE 20 2014 104 550 U1 bekannt. Aus dieser Druckschrift ist weiterhin ein Rollenmodul der eingangs genannten Art bekannt. Das Rollenmodul weist eine Halterung in Form eines Tagkörpers und eine im Tragkörper über eine senkrecht zur Längsrichtung und zur Höhenrichtung der Lasche angeordnete Achse gelagerte Stützrolle auf. Die Achse ist lediglich in ihrem einen Endbereich mit dem Tragkörper verbunden bzw. in diesem gelagert. Der Tragkörper ist seinerseits an der Außenseite einer Lasche der Energieführungskette angeordnet und mit der Lasche über deren untere und obere Schmalseiten greifende Klammern verbunden.

Werden die aus der DE 20 2014 104 550 U1 bekannten Stützrollen und deren Achsen durch das Gewicht der Energieführungskette belastet, treten Biege- oder Knickkräfte an den Achsen der Stützrollen auf, die zu Abweichungen der Achsen aus der horizontalen Querrichtung führen können.

Aus der JP 2010 228904 A ist eine Energieführungskette bekannt, die parallele erste Laschenstränge aus gegenüberliegenden ersten Laschen aufweist, wobei die ersten Laschen jedes ersten Laschenstrangs gelenkig miteinander verbunden sind. Die beiden ersten Laschenstränge liegen aneinander an, wobei die ersten Laschen eines ersten Laschenstrangs mit den ersten Laschen des anderen ersten Laschenstrangs gelenkig mit einander verbunden sind. Zumindest einige der gegenüberliegenden ersten Laschen sind durch erste Querstege miteinander verbunden. Außerhalb der beiden ersten Laschenstränge und parallel zu diesen ist ein zweiter Laschenstrang aus gelenkig miteinander verbundenen zweiten Laschen angeordnet, die den ersten Laschen des benachbarten ersten Laschenstrangs gegenüberliegen und von denen zumindest einige über zweite Querstege mit den jeweils gegenüberliegenden ersten Laschen verbunden sind.Zwischen zumindest einigen der gegenüberliegenden ersten und zweiten Laschen sind Rollen angeordnet, die an einer senkrecht zu den ersten und zweiten Querstegen weisenden Seite der Energieführungskette über den ersten und zweiten Laschen vorstehen.

Aus der JP 2010 127396 A ist eine Energieführungskette bekannt, die aus zwei sich ineinander verhakenden Kettenteilen besteht. Jedes der beiden Kettenteile weist parallele erste Laschenstränge aus gegenüberliegenden Laschen auf, die jeweils aus Innen- und Außenlaschen gebildet und gelenkig miteinander verbunden sind, wobei die gegenüberliegenden ersten Laschen durch Querstege miteinander verbunden sind. Außerhalb der beiden ersten Laschenstränge und parallel zu diesen ist jeweils ein zweiter Laschenstrang aus gelenkig miteinander verbundenen zweiten Laschen angeordnet, die jeweils aus Innen- und Außenlaschen gebildet sind. Die zweiten Laschen sind über die die gegenüberliegenden ersten Laschen verbindenden und nach außen vorstehenden Querstege mit den jeweils gegenüberliegenden ersten Laschen durch Presssitz fest miteinander verbunden. Zwischen den gegenüberliegenden ersten und zweiten Laschen sind Rollen angeordnet, die an den senkrecht zu den Querstegen aufweisenden Seiten der Energieführungskette nicht über den ersten und zweiten Laschen vorstehen. Die Rollen sind dazu ausgelegt, mit Antriebs-Zahnrädern zusammenzuwirken, indem sie zwischen die Zähne der Antriebs-Zahnräder eingreifen.

Die beiden so ausgebildeten Kettenteile werden durch die jeweiligen Antriebs-Zahnräder zusammengeführt, so dass sich die ersten und zweiten Laschen der jeweiligen Kettenteile miteinander verhaken und eine steife Energieführungskette bilden, die durch die Antriebs-Zahnräder in ihrer Längsrichtung verfahrbar ist und zwischen den Querstegen des einen Kettenteils und den Querstegen des anderen Kettenteils Leitungen aufnehmen kann.

Der vorliegenden Erfindung liegt die Aufgabe zu Grunde, eine Energieführungskette und ein an einer Energieführungskette anordenbares Rollenmodul zu schaffen, das auch bei einer starken auf die Rollen und deren Achsen wirkende Last eine weitestgehende Stabilität der Lage und Lagerung der Rollen gewährleistet.

Die Aufgabe wird erfindungsgemäß durch eine Energieführungskette nach Anspruch 1 und ein Rollenmodul jeweils nach einem der Ansprüche 10 und 11 der vorliegenden Anmeldung gelöst.

Erfindungsgemäß weist eine Energieführungskette zur Aufnahme und Führung von Energie- und Informationsübertragungsleitungen, insbesondere in Form von Kabeln und Schläuchen, parallele erste Laschenstränge aus gegenüberliegenden ersten Laschen auf, wobei zwischen den ersten Laschensträngen der Innenraum der Energieführungskette verläuft, und wobei die ersten Laschen jedes ersten Laschenstrangs gelenkig miteinander verbunden und zumindest einige der gegenüberliegenden ersten Laschen durch erste Querstege miteinander verbunden sind. Außerhalb mindestens eines ersten Laschenstrangs bezüglich des zwischen den ersten Laschensträngen verlaufenden Innenraums der Energieführungskette und parallel zu diesem ersten Laschenstrang ist ein zweiter Laschenstrang aus gelenkig miteinander verbundenen zweiten Laschen angeordnet, die den ersten Laschen des benachbarten ersten Laschenstrangs gegenüberliegen und von denen zumindest einige über zweite Querstege mit den jeweils gegenüberliegenden ersten Laschen verbunden sind. Zwischen zumindest einigen der gegenüberliegenden ersten und zweiten Laschen sind Rollen angeordnet, die an mindestens einer senkrecht zu den ersten und zweiten Querstegen weisenden Seite der Energieführungskette über den ersten und zweiten Laschen vorstehen.

Im Folgenden beziehen sich Begriffe wie "außerhalb", "innerhalb", "innen" und "außen" immer auf den Innenraum der Energieführungskette. Dadurch, dass die Rollen im Zwischenraum zwischen den gegenüberliegenden ersten und zweiten Laschen angeordnet sind, sind die Rollen beim Verfahren gegenüber seitlichen Hindernissen geschützt, da die Rollen nicht seitlich nach außen exponiert hervorstehen.

Bei einer bevorzugten Ausbildung der erfindungsgemäßen Energieführungskette sind unmittelbar benachbarte Laschen der ersten und zweiten Laschenstränge aus ihrer in Längsrichtung der Energieführungskette im Wesentlichen gestreckten Lage in einer ersten Verschwenkrichtung über einen Winkel α ≠ 0° relativ zueinander verschwenkbar, so dass die Energieführungskette dabei zu einem ersten Bogen biegbar ist, und in einer der ersten Verschwenkrichtung entgegengesetzten, zweiten Verschwenkrichtung über einen Verschwenkwinkel β ≥ 0° verschwenkbar, wobei α > β ist. Erfindungsgemäß kann vorgesehen sein, dass die Rollen an der Außenseite der zu dem ersten Bogen biegbaren Energieführungskette über die ersten und zweiten Laschen vorstehen. Die Rollen können insbesondere an der Außenseite in Bezug auf den Umlenkbogen radial nach außen vorstehen, damit die Energieführungskette auch bei hohem Leitungsgewicht ohne Verschleiß auf dem jeweiligen Untergrund fahren kann.

Die erfindungsgemäße Energieführungskette kann auch vorgespannt sein, indem die benachbarten Laschen statt aus einer im Wesentlichen gestreckten Lage zueinander aus einer, in der Regel im unbelasteten Zustand, in der ersten Verschwenkrichtung abgewickelten Lage heraus verschränkt werden können und die Verschwenkung in der entgegengesetzten Verschwenkrichtung blockiert ist.

Die Energieführungskette ist vorzugsweise dazu ausgelegt, dass sie mit einem Trum an der Außenseite der zu dem ersten Bogen biegbaren Energieführungskette (ihrer Unterseite) mit den Rollen auf dem Untergrund aufliegen bzw. fahren kann. Die ersten und zweiten Laschen weisen vorzugsweise die gleiche Höhe auf.

Die von der Unterseite wegweisende Seite (Oberseite) der zweiten Laschen kann in mindestens der gleichen Höhe wie die Oberseiten der ersten Laschen angeordnet sein. Bei dieser Anordnung kann die Energieführungskette mit einem oberen Trum auf dem über die Rollen auf dem Untergrund aufliegenden unteren Trum über die oberen Schmalseiten der zweiten Laschen und gegebenenfalls auch der ersten Laschen gleiten oder, wenn die Rollen zusätzlich zum Überstand an der Außenseite auch über die oberen Schmalseiten oder alternativ nur an der Oberseite vorstehen, abrollen. In einer alternativen Ausführung können die Oberseiten der ersten und zweiten Laschen auch unterschiedliche Höhen aufweisen. Gegebenenfalls kann dann das Obertrum auf den Oberseiten entweder der ersten oder zweiten Lasche gleiten bzw. abrollen.

Der Durchmesser der Rollen kann größer sein als die Höhe der ersten oder zweiten Laschen. Bevorzugt ist der Durchmesser der Rollen grö0er oder gleich der Höhe der ersten oder zweiten Laschen und kleiner oder gleich der doppelten Höhe der ersten oder zweiten Laschen.

Die mit den zweiten Querstegen verbundenen ersten Laschen können Befestigungsteile aufweisen, die mit an den zweiten Querstegen angeordneten Befestigungsteilen zur lösbaren Verbindung mit den zweiten Querstegen zusammenwirken.

Die mit den zweiten Querstegen verbundenen zweiten Laschen können Befestigungsteile aufweisen, die mit an den zweiten Querstegen angeordneten Befestigungsteilen zur lösbaren Verbindung mit den zweiten Querstegen zusammenwirken.

Die Befestigungsteile der ersten und zweiten Laschen und die Befestigungsteile der zweiten Querstege können jeweils gleich sein.

Die durch die ersten Querstege verbundenen ersten Laschen können Befestigungsteile aufweisen, die mit an den ersten Querstegen angeordneten Befestigungsteilen zur lösbaren Verbindung mit den ersten Querstegen zusammenwirken.

Die Befestigungsteile der ersten und zweiten Laschen für die ersten und zweiten Querstege und die Befestigungsteile der ersten und zweiten Querstege können jeweils gleich sein. Somit können für die ersten Laschen der ersten Laschenstränge Laschen gleicher Ausbildung mit beidseitigen Befestigungsteilen verwendet werden und für die zweiten Laschen Standardlaschen für eine aus zwei Laschensträngen bestehende Energieführungskette eingesetzt werden, die im Unterschied zu den ersten Laschen nur innen Befestigungsteile aufweisen. Als erste und zweite Querstege können Standardquerstege mit gegebenenfalls unterschiedlicher Länge eingesetzt werden.

Die zweiten Laschen des zweiten Laschenstrangs können jedoch auch, neben ihren Befestigungsteilen zur Befestigung der zweiten Querstege, weitere Befestigungsteile zur Befestigung außenseitiger Querstege zum Ankoppeln eines weiteren aus ersten Laschen und ersten Querstegen bestehenden Energieführungsmoduls aufweisen, wobei die zweiten Laschen dann wie die ersten Laschen mit beidseitigen Befestigungsteilen ausgebildet sind. An dieses Energieführungsmodul kann wiederum ein Rollenmodul angekoppelt werden.

Die ersten und zweiten Laschen können gekröpfte Überlappungsbereiche mit den unmittelbar benachbarten Laschen aufweisen. Die gegenüberliegenden ersten Laschen der beiden ersten Laschenstränge können dabei so angeordnet sein, dass sich jeweils ein nach innen und ein nach außen gekröpfter Überlappungsbereich gegenüberliegen. Die den ersten Laschen gegenüberliegenden zweiten Laschen eines der zweiten Laschenstränge können so angeordnet sein, dass sich jeweils die nach innen gekröpften und die nach außen gekröpften Überlappungsbereiche der ersten und zweiten Laschen gegenüberliegen, während die zweiten Laschen des anderen zweiten Laschenstrangs so angeordnet sind, dass sich die nach innen gekröpften Überlappungsbereiche der ersten Laschen und die nach außen gekröpften Überlappungsbereiche der zweiten Laschen sowie die nach außen gekröpften Überlappungsbereiche der ersten Laschen und die nach innen gekröpften Überlappungsbereiche der zweiten Laschen gegenüberliegen.

Gemäß einer bevorzugten Weiterbildung der Erfindung ist die Rolle in einer Halterung gelagert, die in Form eines Bügels ausgebildet ist, mit zwei zu den Laschen parallelen Stegen, zwischen denen die Rolle angeordnet ist und die in einem ersten Endbereich durch einen Verbindungssteg miteinander verbunden sind. Zusätzlich oder alternativ kann die Rolle auch in oder an der zweiten Lasche und der gegenüberliegenden ersten Lasche gelagert sein.

Die Halterung kann einen zweiten Quersteg zwischen einer ersten und einer dieser gegenüberliegenden zweiten Lasche bilden. Die Halterung kann im Bereich des Verbindungsstegs und/oder in einem dem ersten Endbereich gegenüberliegenden zweiten Endbereich der parallelen Stege Befestigungsteile aufweisen, die mit den Befestigungsteilen der seitlich der Halterung angeordneten ersten und zweiten Lasche zusammenwirken.

Die dazwischen angeordnete Rollen aufweisenden ersten und zweiten Laschen können an der Seite (Oberseite), die der Seite (Unterseite), an der die Rollen nach außen vorstehen, gegenüberliegt, durch einen im Wesentlichen geraden zweiten Quersteg miteinander verbunden sein.

Dabei kann die Rolle in einer Halterung gelagert sein, die sich innen auf dem im Wesentlichen geraden zweiten Quersteg abstützt und die an der gegenüberliegenden ersten und zweiten Lasche befestigt ist. Zur Befestigung kann die Halterung die Seite (Unterseite) der ersten und zweiten Lasche, an der die Rolle nach außen vorsteht, jeweils übergreifen und sich an dieser Seite abstützen. Die Abstützung kann durch zwei parallele Stege erfolgen, zwischen denen die Rolle angeordnet ist und die sich mit einem Endbereich auf dem zweiten Quersteg abstützen. Die Stege können in ihrem anderen Endbereich jeweils einen nach außen abgewinkelten Bereich aufweisen, wobei die abgewinkelten Bereiche an der Oberseite der ersten und zweiten Lasche anliegen.

Die Halterung kann in Form eines Bügels ausgebildet sein, mit zwei seitlichen zu den Laschen parallelen Stegen, die in einem ersten Endbereich durch einen Verbindungssteg miteinander verbunden sind und in einem dem ersten Endbereich gegenüberliegenden, zweiten Endbereich jeweils einen nach außen abgewinkelten Bereich aufweisen, wobei der Verbindungssteg sich auf der Innenseite des im Wesentlichen geraden zweiten Querstegs abstützt und die abgewinkelten Bereiche an der Unterseite der ersten und zweiten Lasche anliegen.

Die abgewinkelten Bereiche können mittels Schrauben an der Unterseite der ersten und zweiten Lasche befestigt sein.

Bei einer alternativen Ausführung können die abgewinkelten Bereiche ohne Befestigungsmittel auf den Unterseiten der ersten und zweiten Lasche aufliegen, wobei unterhalb des die erste Lasche übergreifenden abgewinkelten Bereichs ein Befestigungselement für die Halterung an der benachbarten ersten oder zweiten Lasche vorgesehen ist. Das Befestigungselement kann ein Befestigungsteil aufweisen, das gleich dem Befestigungsteil des zweiten Querstegs ausgebildet ist und an dem Befestigungsteil der ersten Lasche befestigbar ist. Bevorzugt ist auch ein Befestigungselement mit einem Befestigungsteil für die zweite Lasche vorgesehen, wobei das Befestigungselement wiederum ein Befestigungsteil aufweist, das gleich dem Befestigungsteil des zweiten Querstegs ausgebildet ist und an dem Befestigungsteil der zweiten Lasche befestigbar ist.

Entsprechend kann zumindest einer der zweiten Endbereiche der seitlichen Stege der bügelförmigen Halterung eine Öffnung aufweisen, durch die sich das jeweilige Befestigungselement erstreckt und die abgewinkelten Bereiche gegen seitliche Verschiebung relativ zur ersten bzw. zweiten Lasche festlegt.

Die Befestigungsteile der ersten und/oder zweiten Querstege können im Bereich ihrer Anlage an die jeweiligen Laschen seitliche, sich in Längsrichtung der Laschen erstreckende Verbreiterungen aufweisen, die zumindest an einer Seite über den Überlappungsbereich der unmittelbar benachbarten Lasche vorstehen. Auf diese Weise werden die unmittelbar benachbarten Laschen gegen quer zur Längsrichtung der Laschen gerichteten Versatz gesichert.

Darüber hinaus ist zur Sicherung der Seitenstabilität der Laschenstränge bevorzugt vorgesehen, dass die Laschen zumindest einen in Längsrichtung weisenden Vorsprung und einen Hinterschneidungsbereich aufweisen, wobei der Vorsprung einer Lasche in den Hinterschneidungsbereich einer unmittelbar benachbarten Lasche über mindestens einen Teilbereich des Verschwenkwinkels eingreift. Bevorzugt werden dabei die unmittelbar benachbarten Laschen über den gesamten Verschwenkwinkel gegen quergerichtete Trennung verriegelt.

Die vorliegende Erfindung umfasst ein Rollenmodul zur seitlichen Befestigung an einer Energieführungskette, die parallele Laschenstränge aus gegenüberliegenden ersten Laschen aufweist, wobei zumindest einige der gegenüberliegenden Laschen über Querstege miteinander verbunden sind, eine zweite Lasche, die als Lasche einer aus zwei Laschensträngen bestehenden Energieführungskette geeignet ist, und eine in einer Halterung gelagerte Rolle auf, wobei die Halterung mit der zweiten Lasche verbunden ist und Befestigungsmittel zur lösbaren Befestigung an einer der zweiten Lasche gegenüberliegenden ersten Lasche der Energieführungskette aufweist und wobei die Rolle in einer parallel zur zweiten Lasche weisenden Richtung über die zweite Lasche vorsteht. Die Halterung ist in Form eines Bügels ausgebildet, mit zwei zu der ersten und zweiten Lasche parallelen Stegen, zwischen denen die Rolle angeordnet ist und die in einem ersten Endbereich durch einen Verbindungssteg miteinander verbunden sind.

Der Durchmesser der Rolle kann größer sein als die Höhe der zweiten Lasche und Halterung. Bevorzugt ist der Durchmesser der Rolle größer oder gleich der Höhe der zweiten Lasche und kleiner oder gleich der doppelten Höhe der zweiten Lasche.

Die Halterung kann einen zwischen der ersten Lasche der Energieführungskette und der zweiten Lasche des Rollenmoduls anordenbaren, Quersteg bilden. Die Halterung kann im Bereich des Verbindungsstegs ein Befestigungsteil aufweisen, mit dem sie an einem Befestigungsteil der ersten Lasche lösbar befestigbar ist. Die Halterung kann zusätzlich oder alternativ in einem vom ersten Endbereich abgewandten Endbereich der Stege einen Befestigungsbereich aufweisen, mit dem sie an einem Befestigungsteil der ersten Lasche lösbar befestigbar ist.

Die vorliegende Erfindung umfasst weiterhin ein Rollenmodul mit einem sich im Wesentlichen quer zur zweiten Lasche gerade erstreckenden Quersteg, der in einem ersten Endbereich mit der zweiten Lasche verbunden ist und in einem zweiten Endbereich ein Befestigungsteil zur lösbaren Befestigung an der der zweiten Lasche gegenüberliegenden ersten Lasche der Energieführungskette aufweist. Die Halterung weist zwei sich in Höhenrichtung der zweiten Lasche erstreckende parallele Stege auf, zwischen denen die Rolle angeordnet ist und die sich in einem zum Quersteg weisenden ersten Endbereich auf dem Quersteg abstützen und in einem zweiten Endbereich einen nach außen abgewinkelten Bereich zur Anlage an die Seite der ersten und zweiten Lasche aufweisen, an der die Rolle vorsteht.

Der Quersteg kann in einem Bereich der zweiten Lasche angeordnet sein, der der Seite (Unterseite) der zweiten Lasche, an der die Rolle vorsteht, gegenüberliegt.

Der Quersteg kann auch in seinem ersten Endbereich ein Befestigungsteil aufweisen, das mit einem Befestigungsteil an der zweiten Lasche lösbar befestigbar ist. Dabei können die beiden Befestigungsteile im ersten und zweiten Endbereich des Querstegs gleich ausgebildet sein.

Die Halterung kann in Form eines Bügels ausgebildet sein, wobei die seitlich zur zweiten Lasche parallelen Stege in ihrem ersten Endbereich durch einen Verbindungssteg miteinander verbunden sind, der an der Innenseite des Querstegs anliegt.

Die abgewinkelten Bereiche können Befestigungsmittel zur Befestigung an der Unterseite der ersten und zweiten Lasche aufweisen.

Die seitlichen Stege des Bügels können an ihren ersten Endbereichen sich in ihrer Längsrichtung fortsetzende, seitlich über den Quersteg vorstehende und an den senkrecht zur Achse der Rolle weisenden Stirnseiten des Querstegs anliegende Vorsprünge aufweisen.

Das erfindungsgemäße Rollenmodul kann ein Befestigungselement für die Halterung aufweisen, das ein Befestigungsteil einschließt, das gleich dem Befestigungsteil des Querstegs ausgebildet ist und an einem Befestigungsteil der ersten Lasche befestigbar ist. Weiterhin kann ein zweites Befestigungselement für die Halterung vorgesehen sein, das ein Befestigungsteil einschließt, das gleich dem Befestigungsteil des Querstegs ausgebildet ist und an einem Befestigungsteil der zweiten Lasche befestigbar ist.

Zumindest einer der zweiten Endbereiche der seitlichen Stege des Bügels kann eine Öffnung aufweisen, durch die sich das jeweilige Befestigungselement erstreckt und die abgewinkelten Bereiche gegen seitliche Querverschiebung relativ zur zweiten Lasche und der ersten Lasche, an der die Befestigung des Rollenmoduls vorgesehen ist, festlegt.

Die Befestigungsteile des Querstegs und/oder des Befestigungselements für die Halterung können in Bereichen, an denen sie an den Laschen anliegen, seitliche Verbreiterungen aufweisen, die zumindest an einer Seite Über den Überlappungsbereich der unmittelbar benachbarten Lasche vorstehen.

Die zweite Lasche eines Rollenmoduls kann zumindest einen in ihrer Längsrichtung weisenden Vorsprung und einen Hinterschneidungsbereich aufweisen, wobei der Vorsprung einer Lasche in den Hinterschneidungsbereich einer unmittelbar benachbarten zweiten Lasche über mindestens einen Teilbereich des Verschwenkwinkels eingreifen und dabei einer quergerichteten Trennung der unmittelbar benachbarten Laschen entgegenwirken kann.

Die vorliegende Erfindung schließt weiterhin die Verwendung einer Rolleneinheit in einer Energieführungskette ein, die parallele erste Laschenstränge aus gegenüberliegenden ersten Laschen aufweist, wobei die ersten Laschen jedes ersten Laschenstrangs gelenkig miteinander verbunden sind und zumindest einige der gegenüberliegenden ersten Laschen durch erste Querstege miteinander verbunden sind, und wobei außerhalb mindestens eines ersten Laschenstrangs und parallel zu diesem ein zweiter Laschenstrang aus gelenkig miteinander verbundenen zweiten Laschen angeordnet ist, die den ersten Laschen des benachbarten ersten Laschenstrangs gegenüber liegen und von denen zumindest einige über zweite Querstege mit den jeweils gegenüberliegenden ersten Laschen verbunden sind, wobei die zweiten Querstege in Höhenrichtung der Laschen in einem unteren Bereich oder in einem oberen Bereich angeordnet sind. Die erfindungsgemäße Rolleneinheit weist eine Halterung mit zwei parallelen Stegen und einer zwischen den Stegen gelagerten Rolle auf, wobei die Stege in einem ersten Endbereich jeweils eine Abstützung zur Auflage auf dem zwischen einer ersten und zweiten Lasche angeordneten zweiten Quersteg aufweisen und in einem dem ersten Endbereich gegenüberliegenden, zweiten Endbereich jeweils einen nach außen abgewinkelten Bereich zur Anlage an den von der Abstützung abgewandten Seiten der ersten und zweiten Lasche aufweisen. Die Rolle steht über die nach außen abgewinkelten Bereiche der Stege vor.

Der Durchmesser der Rolle kann größer sein als die Höhe der Halterung. Bevorzugt ist der Durchmesser der Rolle größer oder gleich der Höhe der Halterung und kleiner oder gleich der doppelten Höhe der Halterung.

Die Rolle kann auf einer Achse drehbar angeordnet sein, die an oder in den parallelen Stegen festgelegt ist. Die Rolle kann alternativ auf einer Achse befestigt sein, die in oder an den parallelen Stegen drehbar gelagert ist.

Die Abstützung der parallelen Stege kann jeweils in Form einer stirnseitigen Ausnehmung ihres ersten Endbereichs mit beiderseitigen, sich in Längsrichtung der Stege erstreckenden Vorsprüngen ausgebildet sein. Der Grund der Ausnehmung dient zur Auflage der Stege auf einem sich zwischen einer ersten Lasche der Energieführungskette und einer zweiten Lasche erstreckenden zweiten Quersteg. Die seitlichen Vorsprünge dienen dazu, den zweiten Quersteg an seinen senkrecht zur Achse der Rolle weisenden Stirnseiten zu übergreifen und an diesen anzuliegen.

In Höhe des Grundes der Ausnehmungen der parallelen Stege kann sich ein Verbindungssteg erstrecken, der zur Auflage auf dem zweiten Quersteg gebracht werden kann. Der Verbindungssteg kann sich auch ohne die Ausnehmungen und die seitlichen Vorsprünge der parallelen Stege zwischen den ersten Endbereichen der Stege erstrecken.

Die beiden parallelen Stege mit ihren abgewinkelten Bereichen können einzeln oder, wenn sie durch einen Verbindungssteg miteinander verbunden sind, zusammen als Blechformteil ausgebildet sein.

Die abgewinkelten Bereiche können Befestigungsmittel zur Befestigung an den von der Abstützung abgewandten Seiten der ersten und zweiten Lasche aufweisen, z. B. Löcher zur Befestigung mittels Schrauben.

Zur Befestigung an der ersten und dieser gegenüberliegenden zweiten Lasche können die Stege in der Übergangszone zu den abgewinkelten Bereichen Öffnungen aufweisen, durch die ein Befestigungselement zur Befestigung des zweiten Endbereichs der Stege an der jeweils mit diesen benachbarten ersten und/oder zweiten Lasche in Richtung der Achse der Rolle eingesetzt werden kann.

Die abgewinkelten Bereiche können an einer oder beiden ihrer Seiten zum ersten Endbereich der parallelen Stege weisende Laschen aufweisen, die beim Einsetzen der Befestigungselemente durch die Öffnungen die Befestigungselemente seitlich übergreifen.

Ausführungsbeispiele der vorliegenden Erfindung werden im Folgenden anhand der Zeichnung näher erläutert.

In der Zeichnung zeigen:
- Figur 1: eine perspektivische Ansicht (von unten) eines Abschnitts eines ersten Ausführungsbeispiels einer Energieführungskette,
- Figur 2: ein Kettenglied mit Rollen der in Figur 1 gezeigten Energieführungskette in perspektivischer Ansicht (von unten),
- Figur 3: eine perspektivische Ansicht (von unten) eines Abschnitts eines zweiten Ausführungsbeispiels einer Energieführungskette,
- Figur 4: ein Kettenglied mit Rollen der in Figur 3 gezeigten Energieführungskette in perspektivischer Ansicht (von unten),
- Figur 5: eine perspektivische Ansicht einer in der Energieführungskette gemäß Figur 1 einsetzbaren Rolleneinheit und
- Figur 6: eine perspektivische Ansicht einer in die Energieführungskette gemäß Figur 3 einsetzbaren Rolleneinheit.

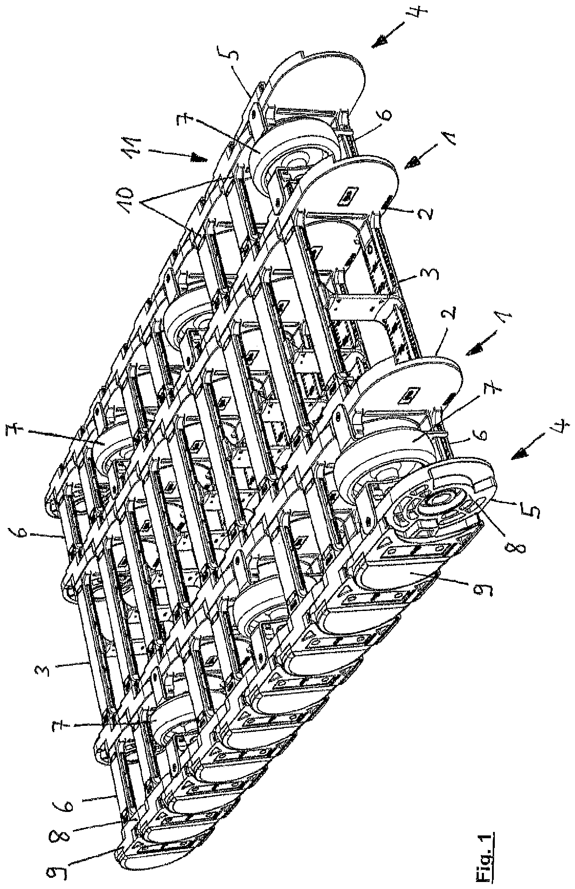

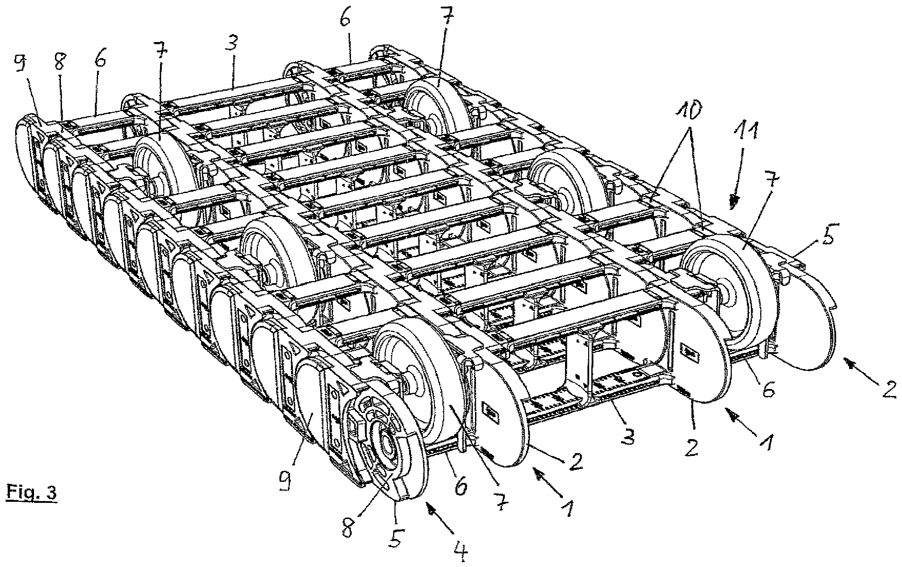

Die in den Figuren 1 und 3 (als Abschnitt eines Trums) dargestellten Energieführungsketten weisen parallele erste Laschenstränge 1 aus gegenüberliegenden ersten Laschen 2 auf, wobei die ersten Laschen 2 jedes ersten Laschenstrangs 1 gelenkig miteinander verbunden und die gegenüberliegenden ersten Laschen 2 durch erste Querstege 3 miteinander verbunden sind. Außerhalb der ersten Laschenstränge 1 und parallel zu diesen ist jeweils ein zweiter Laschenstrang 4 aus gelenkig miteinander verbundenen zweiten Laschen 5 angeordnet, die den ersten Laschen 2 des benachbarten ersten Laschenstrangs 1 gegenüber liegen und über zweite Querstege 6 mit den jeweils gegenüberliegenden ersten Laschen 2 verbunden sind.

Zwischen den Laschen 2, 5 jedes dritten Paares gegenüberliegender erster und zweiter Laschen sind Rollen 7 angeordnet, die an mindestens einer senkrecht zu den ersten und zweiten Querstegen 3, 6 weisenden Seite (Unterseite) der Energieführungskette über den ersten und zweiten Laschen 2, 5 vorstehen.

Bei den in den Figuren 1 und 3 gezeigten Abschnitten von Energieführungsketten handelt es sich um Abschnitte eines Trums der Energieführungsketten, das an seiner Unterseite mit den Rollen 7 auf einer Unterlage abrollen kann. Insbesondere handelt es sich um Energieführungsketten, deren unmittelbar benachbarte Laschen in den ersten und zweiten Laschensträngen 1 bzw. 4 aus ihrer in Längsrichtung der Energieführungskette im Wesentlichen gestreckten Lage über einen von null verschiedenen Winkel relativ zueinander verschwenkbar sind, so dass die Energieführungskette dabei zu einem Bogen biegbar ist. Die Rollen 7 stehen an der Außenseite der zu dem Bogen biegbaren Energieführungskette über die ersten und zweiten Laschen 2, 5 vor. Die Außenseite bildet die Unterseite des in den Figuren 1 und 3 jeweils gezeigten Trums der Energieführungskette.

Bei den ersten Laschen und zweiten Laschen 2, 5 handelt es sich um Laschen gleicher Größe und mit gleichem Verschwenkwinkel. Sie weisen gekröpfte Überlappungsbereiche mit den unmittelbar benachbarten Laschen eines Laschenstrangs auf. Die gegenüberliegenden ersten Laschen 2 der beiden ersten Laschenstränge 1 sind so angeordnet, dass sich jeweils ein nach innen gekröpfter Überlappungsbereich 8 und ein nach außen gekröpfter Überlappungsbereich 9 gegenüber liegen. Die den ersten Laschen 2 gegenüberliegenden zweiten Laschen 5 eines der zweiten Laschenstränge 4 sind so angeordnet, dass sich jeweils die nach innen gekröpften und die nach außen gekröpften Überlappungsbereiche 8, 9 der ersten und zweiten Laschen 2, 5 gegenüber liegen, während die zweiten Laschen 5 des anderen zweiten Laschenstrangs 4 so angeordnet sind, dass die nach innen gekröpften Überlappungsbereiche 8 der ersten Laschen 2 den nach außen gekröpften Überlappungsbereichen 9 der zweiten Laschen 5 und die nach außen gekröpften Überlappungsbereiche der ersten Laschen 2 den nach innen gekröpften Überlappungsbereichen 8 der zweiten Laschen 5 gegenüber liegen.

Die ersten Laschen 2 der ersten Laschenstränge 1 sind gleich ausgebildet. Die zweiten Laschen 5 der zweiten Laschenstränge 4 sind in ihrer Anordnung in der Energieführungskette spiegelsymmetrisch bezüglich der in ihrer Mitte und parallel zu den Laschen verlaufenden Ebene ausgebildet. Somit können für die zweiten Laschen 5 Standardlaschen einer aus zwei Laschensträngen bestehenden Energieführungskette verwendet werden, die spiegelsymmetrisch bezüglich ihrer parallelen Mittelebene ausgebildet sind. Als erste Laschen 2 können Laschen eines einzigen Typs, d. h. mit gleicher Ausbildung, eingesetzt werden.

Die ersten und zweiten Querstege 3, 6 sind, bis auf ihre unterschiedliche Länge, ebenfalls gleich ausgebildet, so dass für die zweiten Querstege 6 den ersten Querstegen 3 entsprechende Standard-Querstege einer Energieführungskette verwendet werden können. Sie weisen in ihren beiden Endbereichen gleiche Befestigungsteile zur lösbaren Verbindung mit den ersten bzw. zweiten Laschen 2 bzw. 5 auf.

Zur Verbindung mit den ersten bzw. zweiten Querstegen 3 bzw. 6 sind an den Innen- und Außenseiten der ersten Laschen 2 Befestigungsteile vorgesehen, die mit den Befestigungsteilen 10 der ersten und zweiten Querstege 3, 6 zusammenwirken. Die Befestigungsteile sind als (in der Zeichnung nicht dargestellte) Zapfen ausgebildet, die mit den Befestigungsteilen 10 der ersten und zweiten Querstege 3, 6 verrastbar sind. Die Befestigungsteile für die ersten und zweiten Querstege 3, 6 sind gegenüberliegend an ersten Laschen 2 jeweils in deren unterem und oberem Bereich mittig angeordnet und gleich ausgebildet. Die ersten Laschen 2 beider ersten Laschenstränge 1 können somit in Form eines einzigen Laschentyps als Sonderlasche hergestellt werden.

Die zweiten Laschen 5 weisen an ihren Innenseiten (in der Zeichnung nicht dargestellte) Befestigungsteile zur Verbindung mit den zweiten Querstegen 6 auf, die mit den Befestigungsteilen der ersten Laschen 2 gleich ausgebildet und, wie bei diesen, in ihrem oberen Bereich und ihrem unteren Bereich mittig angeordnet sind.

Die im Bereich der Unterseite der Energieführungskette, an der die Rollen 7 vorstehen, des in den Figuren 1 und 3 gezeigten Trums der Energieführungskette angeordneten zweiten Querstege 6 sind bei jedem dritten Kettenglied, das eine Rolle 7 aufnimmt, ausgespart, während an der der Unterseite gegenüberliegenden Oberseite des Trums die gegenüberliegenden ersten und zweiten Laschen 2, 5 jeweils einen zweiten Quersteg 6 aufweisen.

Die nach innen und nach außen gekröpften Überlappungsbereiche 8, 9 der ersten und zweiten Laschen 2, 5 weisen in einem Überlappungsbereich an der Seite des benachbarten gekröpften Überlappungsbereichs Gelenkzapfen und in ihrem anderen Überlappungsbereich an der zum benachbarten gekröpften Überlappungsbereich weisenden Seite Gelenkausnehmungen zur Bildung einer gelenkigen Verbindung mit jeweils unmittelbar benachbarten Laschen sowie Anschläge und mit diesen zusammenwirkende Anschlagflächen zur Begrenzung des Verschwenkwinkels auf.

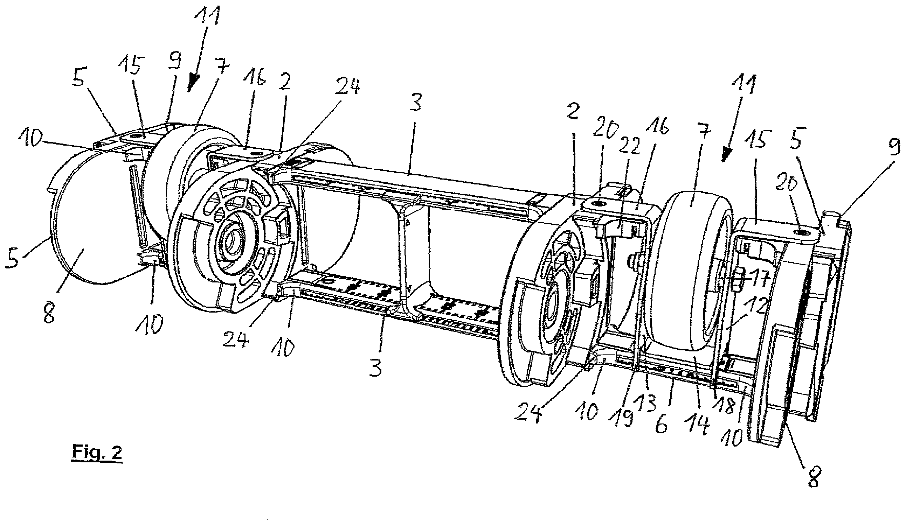

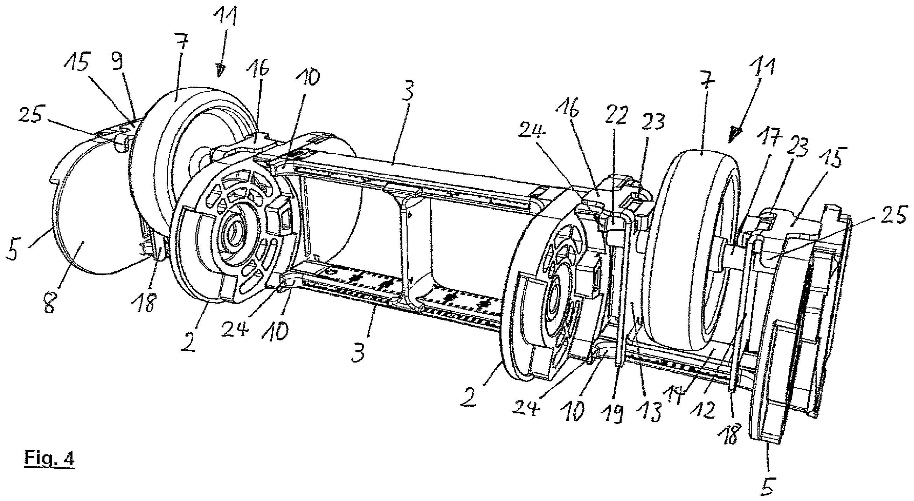

Anstelle der unterseitigen zweiten Querstege 6 ist in jedem dritten Kettenglied eine Halterung 11 mit der Rolle 7 eingesetzt. Wie insbesondere aus den Figuren 2 und 4 hervorgeht, ist die Halterung 11 bügelförmig ausgebildet mit zwei seitlichen zu der jeweiligen ersten und zweiten Laschen 2, 5 parallelen Stegen 12, 13, die in einem ersten Endbereich durch einen Verbindungssteg 14 miteinander verbunden sind und in einem dem ersten Endbereich gegenüberliegenden, zweiten Endbereich jeweils einen nach außen abgewinkelten Bereich 15, 16 aufweisen. Der Verbindungssteg 14 stützt sich auf der Innenseite des jeweiligen im Bereich der Oberseite des in den Figuren 1 und 3 gezeigten Trums einer Energieführungskette angeordneten zweiten Querstegs 6 ab. Die abgewinkelten Bereiche 15 und 16 liegen an der Unterseite der gegenüberliegenden ersten und zweiten Lasche 2, 5 an. Die jeweilige Rolle 7 ist drehbar auf einer an den beiden parallelen Stegen 12 und 13 befestigten Achse 17 gelagert.

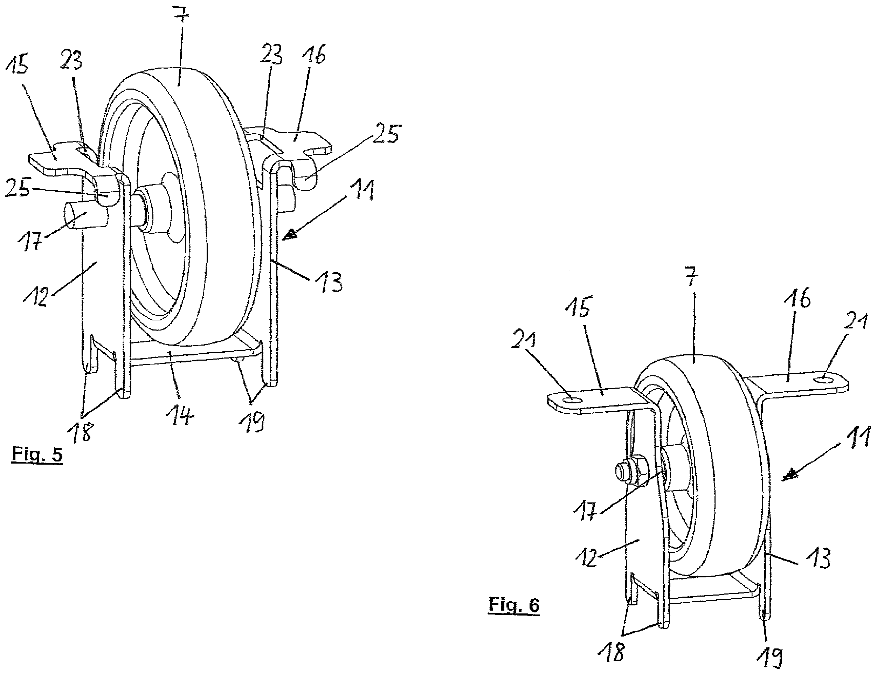

Wie aus den Figuren 2 und 4 und insbesondere den Figuren 5 und 6 hervorgeht, können die parallelen Stege 12 und 13 der Halterung 11 in ihren ersten Endbereichen, in denen sie mit dem Verbindungssteg 14 verbunden sind, sich in ihrer Längsrichtung fortsetzende, seitlich über den Verbindungssteg 14 und den Quersteg 6 vorstehende und an den senkrecht zur Achse 17 der Rolle 7 weisenden Stirnseiten des zweiten Querstegs 6 anliegende Vorsprünge 18 und 19 aufweisen.

Bei dem in den Figuren 1, 2 und 6 gezeigten Ausführungsbeispiel sind die abgewinkelten Bereiche 15 und 16 jeweils mit einer Schraube 20, die durch ein entsprechendes Loch 21 in den abgewinkelten Bereichen 15 und 16 greift, an der Unterseite der ersten und zweiten Lasche 2, 5 befestigt.

Bei dem in den Figuren 3, 4 und 5 gezeigten Ausführungsbeispiel liegen die abgewinkelten Bereiche 15 und 16 ohne Befestigungsmittel auf den Unterseiten der ersten und zweiten Laschen 2, 5 auf, wobei unterhalb der die erste und zweite Lasche übergreifenden abgewinkelten Bereiche 15, 16 jeweils ein Befestigungselement 22 für die Halterung an der benachbarten ersten oder zweiten Lasche 2 bzw. 5 vorgesehen ist. Das Befestigungselement 22 weist ein Befestigungsteil 10 auf, das gleich dem Befestigungsteil 10 des zweiten Querstegs 6 ausgebildet ist und an dem Befestigungsteil der ersten bzw. zweiten Lasche 2 bzw. 5 befestigt ist. Zur Durchführung der Befestigungselemente 22 durch die beiden parallelen Stege 12, 13 ist im zweiten Endbereich der Stege 12, 13 jeweils eine Öffnung 23 vorgesehen. Das durch die Öffnung 23 sich erstreckende Befestigungselement legt den jeweiligen sich auf der Unterseite der ersten bzw. zweiten Lasche 2 bzw. 5 abstützenden abgewinkelten Bereich 15 bzw. 16 der Halterung 11 gegen seitliche Verschiebung relativ zu der betreffenden Lasche fest.

Die Befestigungsteile 10 der ersten und zweiten Querstege 3, 6 und des Befestigungselements 22 weisen im Bereich ihrer Anlage an die jeweiligen Laschen seitliche, sich in Längsrichtung der Laschen erstreckende Verbreiterungen 24 auf, die über einen Teil des Überlappungsbereichs 8 bzw. 9 der unmittelbar benachbarten Lasche vorstehen, um die unmittelbar benachbarten Laschen gegen quer zur Längsrichtung der Laschen gerichteten Versatz zu sichern.

Um die abgewinkelten Bereiche 15, 16 der Stege 12, 13 zusätzlich gegen Verschiebung in Längsrichtung der mit ihnen verbundenen ersten bzw. zweiten Lasche 2 bzw. 5 zu sichern, weisen die abgewinkelten Bereiche 15, 16 an einer in Längsrichtung der Laschen weisenden Seite jeweils eine sich in Richtung auf den Verbindungssteg 14 erstreckende Lasche 25 auf, die seitlich über das Befestigungselement 22 greift.

Das jeweils aus einer zweiten Lasche 5, einem zweiten Quersteg 6, der oben beschriebenen Halterung 11 und der darin gelagerten Rolle 7 bestehende Bauteil bildet ein Rollenmodul, das seitlich an einem aus gegenüberliegenden ersten Laschen 2 und diese verbindenden ersten Querstegen 3 bestehenden Kettenglied einer Energieführungskette befestigt werden kann.

Weiterhin bildet die Halterung 11 mit der darin gelagerten Rolle 7 eine Rolleneinheit, die in ein Bauteil einer Energieführungskette einsetzbar ist, das aus zwei durch erste Querstege 3 miteinander verbundenen ersten Laschen 2 und einer außerhalb einer ersten Lasche 2 mit dieser über einen zweiten Quersteg 6 verbundenen zweiten Lasche 5 besteht.

### Bezugszeichenliste

- 1: erster Laschenstrang
- 2: erste Lasche
- 3: erster Quersteg
- 4: zweiter Laschenstrang
- 5: zweite Lasche
- 6: zweiter Quersteg
- 7: Rolle
- 8: nach innen gekröpfter Überlappungsbereich
- 9: nach außen gekröpfter Überlappungsbereich
- 10: Befestigungsteil
- 11: Halterung
- 12: Steg
- 13: Steg
- 14: Verbindungssteg
- 15: abgewinkelter Bereich
- 16: abgewinkelter Bereich
- 17: Achse
- 18: Vorsprung
- 19: Vorsprung
- 20: Schraube
- 21: Loch
- 22: Befestigungselement
- 23: Öffnung
- 24: Verbreiterung
- 25: Lasche

## Patentansprüche

1. Energieführungskette zur Aufnahme und Führung von Energie- und Informationsübertragungsleitungen, insbesondere in Form von Kabeln und Schläuchen, die parallele erste Laschenstränge (1) aus gegenüberliegenden ersten Laschen (2) aufweist, wobei zwischen den ersten Laschensträngen (1) der Innenraum der Energieführungskette verläuft und wobei die ersten Laschen (2) jedes ersten Laschenstrangs (1) gelenkig miteinander verbunden und zumindest einige der gegenüberliegenden ersten Laschen (2) durch erste Querstege (3) miteinander verbunden sind, wobei außerhalb mindestens eines ersten Laschenstrangs (1) bezüglich des zwischen den ersten Laschensträngen (1) verlaufenden Innenraums der Energieführungskette und parallel zu diesem ersten Laschenstrang ein zweiter Laschenstrang (4) aus gelenkig miteinander verbundenen zweiten Laschen (5) angeordnet ist, die den ersten Laschen (2) des benachbarten ersten Laschenstrangs (1) gegenüberliegen und von denen zumindest einige über zweite Querstege (6) mit den jeweils gegenüberliegenden ersten Laschen (2) verbunden sind, und wobei zwischen zumindest einigen der gegenüberliegenden ersten und zweiten Laschen (2, 5) Rollen (7) angeordnet sind, die an mindestens einer senkrecht zu den ersten und zweiten Querstegen (3, 6) weisenden Seite der Energieführungskette über den ersten und zweiten Laschen (2, 5) vorstehen.

2. Energieführungskette nach Anspruch 1, **dadurch gekennzeichnet, dass** die mit den zweiten Querstegen (6) verbundenen ersten und/oder zweiten Laschen (2, 5) Befestigungsteile aufweisen, die mit an den zweiten Querstegen (6) angeordneten Befestigungsteilen (10) zur lösbaren Verbindung mit den zweiten Querstegen (6) zusammenwirken.

3. Energieführungskette nach Anspruch 1 oder 2, **dadurch gekennzeichnet, dass** die durch die ersten Querstege (3) verbundenen ersten Laschen (2) Befestigungsteile aufweisen, die mit an den ersten Querstegen (3) angeordneten Befestigungsteilen (10) zur lösbaren Verbindung mit den ersten Querstegen (3) zusammenwirken und die Befestigungsteile der ersten und zweiten Laschen für die ersten und zweiten Querstege (3, 6) und die Befestigungsteile (10) der ersten und zweiten Querstege jeweils gleich sind.

4. Energieführungskette nach einem der Ansprüche 1-3,
**dadurch gekennzeichnet, dass** die Rolle (6) in einer Halterung (11) gelagert ist, die in Form eines Bügels ausgebildet ist, mit zwei zu den ersten und zweiten Laschen (2, 5) parallelen Stegen (12, 13), zwischen denen die Rolle (7) angeordnet ist und die in einem ersten Endbereich durch einen Verbindungssteg (14) miteinander verbunden sind, wobei die Halterung einen zweiten Quersteg zwischen einer ersten Lasche (2) und einer dieser gegenüberliegenden zweiten Lasche (5) bildet.

5. Energieführungskette nach einem der Ansprüche 1-3,
**dadurch gekennzeichnet, dass** die eine dazwischen angeordnete Rolle (7) aufweisende erste und zweite Lasche (2, 5) an der Seite, die der Seite, an der die Rolle (7) nach außen vorsteht, gegenüberliegt, durch einen im Wesentlichen geraden zweiten Quersteg (6) miteinander verbunden sind.

6. Energieführungskette nach Anspruch 5, **dadurch gekennzeichnet, dass** die Rolle (7) in einer Halterung (11) gelagert ist, die sich innen auf dem Quersteg (6) abstützt und die an der gegenüberliegenden ersten und zweiten Lasche (2, 5) befestigt ist.

7. Energieführungskette nach Anspruch 6, **dadurch gekennzeichnet, dass** die Halterung (11) in Form eines Bügels ausgebildet ist, mit zwei seitlichen zu den Laschen (2, 5) parallelen Stegen (12, 13), die in einem ersten Endbereich durch einen Verbindungssteg (14) miteinander verbunden sind und in einem dem ersten Endbereich gegenüberliegenden, zweiten Endbereich jeweils einen nach außen abgewinkelten Bereich (15, 16) aufweisen, wobei der Verbindungssteg (14) sich auf der Innenseite des im Wesentlichen geraden zweiten Querstegs (6) abstützt und die abgewinkelten Bereiche (15, 16) an der Unterseite der ersten und zweiten Lasche (2, 5) anliegen.

8. Energieführungskette nach Anspruch 7, **dadurch gekennzeichnet, dass** die abgewinkelten Bereiche (15, 16) mittels Schrauben (20) an der Unterseite der ersten und zweiten Lasche (2, 5) befestigt sind.

9. Energieführungskette nach Anspruch 7, **dadurch gekennzeichnet, dass** die abgewinkelten Bereiche (15, 16) ohne Befestigungsmittel auf den Unterseiten der ersten und zweiten Lasche (2, 5) aufliegen, wobei unterhalb des die erste Lasche (2) übergreifenden abgewinkelten Bereichs (15) ein Befestigungselement (22) für die Halterung an der benachbarten ersten oder zweiten Lasche (2, 5) vorgesehen ist, wobei das Befestigungselement (22) ein Befestigungsteil (10) aufweist, das gleich dem Befestigungsteil (10) des zweiten Querstegs (6) ausgebildet ist und an dem Befestigungsteil der ersten Lasche befestigbar ist.

10. Rollenmodul zur seitlichen Befestigung an einer Energieführungskette, die parallele Laschenstränge (1) aus gegenüberliegenden ersten Laschen (2) aufweist, wobei zumindest einige der gegenüberliegenden Laschen (2) über Querstege (3) miteinander verbunden sind, wobei das Rollenmodul eine zweite Lasche (5), die als Lasche einer aus zwei Laschensträngen bestehenden Energieführungskette geeignet ist, und eine in einer Halterung (11) gelagerte Rolle (7) aufweist, wobei die Halterung (11) mit der zweiten Lasche (5) verbunden ist und ein Befestigungsmittel zur lösbaren Befestigung an einer der zweiten Lasche (5) gegenüberliegenden ersten Lasche (2) der Energieführungskette aufweist und die Rolle (7) in einer parallel zur zweiten Lasche (5) weisenden Richtung über die zweite Lasche (5) vorsteht, **dadurch gekennzeichnet, dass** die Halterung (11) in Form eines Bügels ausgebildet ist, mit zwei zur zweiten Lasche (5) parallelen Stegen (12, 13), zwischen denen die Rolle (7) angeordnet ist und die in einem ersten Endbereich durch einen Verbindungssteg (14) miteinander verbunden sind.

11. Rollenmodul zur seitlichen Befestigung an einer Energieführungskette, die parallele Laschenstränge (1) aus gegenüberliegenden ersten Laschen (2) aufweist, wobei zumindest einige der gegenüberliegenden Laschen (2) über Querstege (3) miteinander verbunden sind, wobei das Rollenmodul eine zweite Lasche (5), die als Lasche einer aus zwei Laschensträngen bestehenden Energieführungskette geeignet ist, und eine in einer Halterung (11) gelagerte Rolle (7) aufweist, wobei die Halterung (11) mit der zweiten Lasche (5) verbunden ist und ein Befestigungsmittel zur lösbaren Befestigung an einer der zweiten Lasche (5) gegenüberliegenden ersten Lasche (2) der Energieführungskette aufweist und die Rolle (7) in einer parallel zur zweiten Lasche (5) weisenden Richtung über die zweite Lasche (5) vorsteht, wobei das Rollenmodul einen sich im Wesentlichen quer zur zweiten Lasche (5) und gerade erstreckenden Quersteg (6) aufweist, der in einem ersten Endbereich mit der zweiten Lasche (5) verbunden ist und in einem zweiten Endbereich ein Befestigungsteil (10) zur lösbaren Befestigung an einer ersten Lasche (2) der Energieführungskette aufweist, **dadurch gekennzeichnet, dass** die Halterung (11) zwei sich in Höhenrichtung der zweiten Lasche (5) erstreckende parallele Stege (12, 13) aufweist, zwischen denen die Rolle (7) angeordnet ist und die sich in einem zum Quersteg (6) weisenden ersten Endbereich auf dem Quersteg (6) abstützen und die in einem zweiten Endbereich einen nach außen abgewinkelten Bereich (15, 16) zur Anlage an die Seite der ersten und zweiten Lasche (2, 5), an der die Rolle (7) vorsteht, aufweisen.

12. Rollenmodul nach Anspruch 11, **dadurch gekennzeichnet, dass** der Quersteg (6) in seinem ersten Endbereich ein Befestigungsteil (10) aufweist, das mit einem Befestigungsteil an der zweiten Lasche (5) lösbar verbunden ist.

13. Rollenmodul nach Anspruch 11, **dadurch gekennzeichnet, dass** die Rolle (7) in einer Halterung (11) gelagert ist, die sich innen auf dem Quersteg (6) abstützt, die mit der zweiten Lasche (5) verbunden ist und Befestigungsmittel zur Verbindung mit einer gegenüberliegenden ersten Lasche (2) einer Energieführungskette aufweist.

14. Rollenmodul nach Anspruch 10 oder einem der Ansprüche 11-13, **dadurch gekennzeichnet, dass** die Halterung (11) in Form eines Bügels ausgebildet ist, mit zwei seitlichen zur zweiten Lasche (5) parallelen Stegen (12, 13), die in einem ersten Endbereich durch einen Verbindungssteg (14) miteinander verbunden sind und in einem zweiten Endbereich einen nach außen abgewinkelten Bereich (15, 16) aufweisen, wobei der Verbindungssteg (14) an der Innenseite des Querstegs (6) anliegt und die abgewinkelten Bereiche (15, 16) zur Anlage an die Seite der ersten und zweiten Lasche (2, 5), an der die Rolle (7) vorsteht, ausgelegt sind.

15. Rollenmodul nach Anspruch 10 oder einem der Ansprüche 11-13, **dadurch gekennzeichnet, dass** die abgewinkelten Bereiche (15, 16) Befestigungsmittel zur Befestigung an der Seite der ersten und zweiten Lasche (2, 5), an der die Rolle (7) vorsteht, aufweisen.

## Claims

1. An energy guide chain for accommodating and guiding energy and information transmission lines, in particular in the form of cables and hoses, which has parallel first plate rows (1) comprising opposite first plates (2), wherein the internal space in the energy guide chain extends between the first plate rows (1) and wherein the first plates (2) of each first plate row (1) are hingedly connected together and at least some of the opposite first plates (2) are connected together by first transverse limbs (3), wherein arranged outside at least one first plate row (1) with respect to the internal space of the energy guide chain, that extends between the first plate rows (1), and parallel to the first plate row is a second plate row (4) comprising hingedly interconnected second plates (5) which are opposite the first plates (2) of the adjacent first plate row (1) and of which at least some are connected by way of second transverse limbs (6) to the respectively opposite first plates (2), and wherein arranged between at least some of the opposite first and second plates (2, 5) are rollers (7) which project beyond the first and second plates (2, 5) at at least one side of the energy guide chain, that faces perpendicularly to the first and second transverse limbs (3, 6).

2. An energy guide chain according to claim 1 **characterised in that** the first and/or second plates (2, 5) connected to the second transverse limbs (6) have fixing portions which cooperate with fixing portions (10) arranged at the second transverse limbs (6) for releasable connection to the second transverse limbs (6).

3. An energy guide chain according to claim 1 or claim 2 **characterised in that** the first plates (2) connected by the first transverse limbs (3) have fixing portions which cooperate with fixing portions (10) arranged at the first transverse limbs (3) for releasable connection to the first transverse limbs (3) and the fixing portions of the first and second plates for the first and second transverse limbs (3, 6) and the fixing portions (10) of the first and second transverse limbs are respectively identical.

4. An energy guide chain according to one of claims 1 to 3 **characterised in that** the roller (7) is mounted in a holding means (11) which is in the form of a yoke with two limbs (12, 13) which are parallel to the first and second plates (2, 5) and between which the roller (7) is arranged, and which are connected together in a first end region by a connecting limb (14), wherein the holding means forms a second transverse limb between a first plate (2) and a second plate (5) opposite thereto.

5. An energy guide chain according to one of claims 1 to 3 **characterised in that** the first and second plates (2, 5) having a roller (7) arranged therebetween are connected together by a substantially straight second transverse limb (6) at the side opposite to the side at which the roller (7) projects outwardly.

6. An energy guide chain according to claim 5 **characterised in that** the roller (7) is mounted in a holding means (11) which is supported inwardly on the transverse limb (6) and which is fixed at the opposite first and second plates (2, 5).

7. An energy guide chain according to claim 6 **characterised in that** the holding means (11) is in the form of a yoke with two lateral limbs (12, 13) which are parallel to the plates (2, 5) and which are connected together in a first end region by a connecting limb (14) and which in a second end region opposite the first end region respectively have an outwardly angled region (15, 16), wherein the connecting limb (14) is supported on the inside of the substantially straight second transverse limb (6) and the angled regions (15, 16) bear against the underside of the first and second plates (2, 5).

8. An energy guide chain according to claim 7 **characterised in that** the angled regions (15, 16) are fixed by means of screws (20) to the underside of the first and second plates (2, 5).

9. An energy guide chain according to claim 7 **characterised in that** the angled regions (15, 16) bear without fixing means against the undersides of the first and second plates (2, 5), wherein provided beneath the angled region (15) engaging over the first plate (2) is a fixing element (22) for the holding means on the adjacent first or second plate (2, 5), wherein the fixing element (22) has a fixing portion (10) which is of an identical configuration to the fixing portion (10) of the second transverse limb (6) and can be fixed to the fixing portion of the first plate.

10. A roller module for lateral fixing to an energy guide chain having parallel plate rows (1) comprising opposite first plates (2), wherein at least some of the opposite plates (2) are connected together by way of transverse limbs (3), wherein the roller module has a second plate (5) which is suitable as a plate of an energy guide chain comprising two plate rows and a roller (7) mounted in a holding means (11), wherein the holding means (11) is connected to the second plate (5) and has a fixing means for releasable fixing to a first plate (2) of the energy guide chain, that is in opposite relationship to the second plate (5), and the roller (7) projects beyond the second plate (5) in a direction facing parallel to the second plate (5), **characterised in that** the holding means (11) is in the form of a yoke, with two limbs (12, 13) which are parallel to the second plate (5) and between which the roller (7) is arranged and which are connected together in a first end region by a connecting limb (18).

11. A roller module for lateral fixing to an energy guide chain having parallel plate rows (1) comprising opposite first plates (2), wherein at least some of the opposite plates (2) are connected together by way of transverse limbs (3), wherein the roller module has a second plate (5) which is suitable as a plate of an energy guide chain comprising two plate rows and a roller (7) mounted in a holding means (11), wherein the holding means (11) is connected to the second plate (5) and has a fixing means for releasable fixing to a first plate (2) of the energy guide chain, that is in opposite relationship to the second plate (5), and the roller (7) projects beyond the second plate (5) in a direction facing parallel to the second plate (5), wherein the roller module has a transverse limb (6) which extends substantially transversely relative to the second plate (5) and straight and which in a first end region is connected to the second plate (5) and in a second end region has a fixing portion (10) for releasable fixing to a first plate (2) of the energy guide chain, **characterised in that** the holding means (11) has two parallel limbs (12, 13) which extend in the heightwise direction of the second plate (5) and between which the roller (7) is arranged and which are supported in a first end region facing towards the transverse limb (6) on the transverse limb (6) and which in a second region have an outwardly angled region (15, 16) for bearing against the side of the first and second plate (2, 5) at which the roller (7) projects.

12. A roller module according to claim 11 **characterised in that** in its first end region the transverse limb (6) has a fixing portion (10) releasably connected to a fixing portion at the second plate (5).

13. A roller module according to claim 11 **characterised in that** the roller (7) is mounted in a holding means (11) which is supported inwardly on the transverse limb (6) and which is connected to the second plate (5) and has fixing means for connection to an oppositely disposed first plate (2) of an energy guide chain.

14. A roller module according to claim 10 or one of claims 11 to 13 **characterised in that** the holding means (11) is in the form of a yoke with two lateral limbs (12, 13) which are parallel to the second plate (5) and which in a first end region are connected together by a connecting limb (14) and in a second end region have an outwardly angled region (15, 16), wherein the connecting limb (14) bears against the inside of the transverse limb (6) and the angled regions (15, 16) are adapted to bear against the side of the first and second plate (2, 5), at which the roller (7) projects.

15. A roller module according to claim 10 or one of claims 11 to 13 **characterised in that** the angled regions (15, 16) have fixing means for fixing at the side of the first and second plate (2, 5), at which the roller (7) projects.

## Revendications

1. Chaîne de guidage d'énergie pour la réception et le guidage de lignes de transmission d'énergie et d'informations, en particulier sous forme de câbles et de tuyaux, chaîne qui présente des premiers brins de pattes (1) parallèles formés par des premières pattes (2) opposées, l'intérieur de la chaîne de guidage d'énergie s'étendant entre les premiers brins de pattes (1) et les premières pattes (2) de chaque premier brin de pattes (1) étant reliées entre elles de manière articulée et au moins quelques des premières pattes (2) opposées étant reliées entre elles par des premières traverses (3), à l'extérieur d'au moins un premier brin de pattes (1) par rapport à l'espace intérieur de la chaîne de guidage d'énergie s'étendant entre les premiers brins de pattes (1) et parallèlement à ce premier brin de pattes, étant disposé un deuxième brin de pattes (4) formé par des deuxièmes pattes (5) qui sont reliées entre elles de manière articulée et qui sont opposées aux premières pattes (2) du premier brin de pattes (1) voisin et dont au moins une partie est reliée aux premières pattes (2) respectivement opposées par l'intermédiaire de deuxièmes traverses (6), et des rouleaux (7) étant disposés entre au moins une partie des première et deuxième pattes (2, 5) opposées, lesquels rouleaux faisant saillie au-dessus des première et deuxième pattes (2, 5) sur au moins un côté de la chaîne de guidage d'énergie orienté perpendiculairement aux premières et deuxièmes traverses (3, 6).

2. Chaîne de guidage d'énergie selon la revendication 1, **caractérisée en ce que** la première et/ou la deuxième patte (2, 5) reliée aux deuxièmes traverses (6) présente des parties de fixation qui coopèrent avec des parties de fixation (10) disposées sur les deuxièmes traverses (6) pour une liaison amovible avec les deuxièmes traverses (6).

3. Chaîne de guidage d'énergie selon la revendication 1 ou 2, **caractérisée en ce que** les premières pattes (2) reliées par les premières traverses (3) présentent des parties de fixation qui coopèrent avec des parties de fixation (10) disposées sur les premières traverses (3) pour une liaison amovible avec les premières traverses (3), et les parties de fixation des premières et deuxièmes pattes pour les premières et deuxièmes traverses (3, 6) et les parties de fixation (10) des premières et deuxièmes traverses sont respectivement identiques.

4. Chaîne de guidage d'énergie selon l'une des revendications 1 à 3, **caractérisée en ce que** le rouleau (6) est monté dans un support (11) qui est réalisé sous la forme d'une console avec deux âmes (12, 13) parallèles à la première et à la deuxième patte (2, 5), entre lesquelles est disposé le rouleau (7) et qui sont reliées entre elles dans une première zone d'extrémité par une âme de liaison (14), le support formant une deuxième âme transversale entre une première patte (2) et une deuxième patte (5) opposée à celle-ci.

5. Chaîne de guidage d'énergie selon l'une quelconque des revendications 1 à 3,
**caractérisée en ce que** les première et deuxième pattes (2, 5) entre lesquelles est disposé un rouleau (7) sont reliées l'une à l'autre par une deuxième traverse (6) sensiblement rectiligne sur le côté opposé au côté sur lequel le rouleau (7) fait saillie vers l'extérieur.

6. Chaîne de guidage d'énergie selon la revendication 5, **caractérisée en ce que** le rouleau (7) est supporté dans un support (11) qui est supporté intérieurement sur la traverse (6) et qui est fixé aux première et seconde pattes opposées (2, 5).

7. Chaîne de guidage d'énergie selon la revendication 6, **caractérisée en ce que** le support (11) est réalisé sous la forme d'un étrier, avec deux âmes latérales (12, 13) parallèles aux pattes (2, 5), qui sont reliées entre elles dans une première zone d'extrémité par une âme de liaison (14) et présentent chacune dans une deuxième zone d'extrémité opposée à la première zone d'extrémité une zone coudée vers l'extérieur (15, 16), l'âme de liaison (14) étant supportée sur l'intérieur de la deuxième traverse (6) sensiblement droite, et les zones coudées (15, 16) portant contre la face inférieure des première et deuxième pattes (2, 5).

8. Chaîne de guidage d'énergie selon la revendication 7, **caractérisée en ce que** les zones coudées (15, 16) sont fixées à la face inférieure des première et deuxième pattes (2, 5) au moyen de vis (20).

9. Chaîne de guidage d'énergie selon la revendication 7, **caractérisée en ce que** les zones coudées (15, 16) reposent sans moyens de fixation sur les faces inférieures de la première et de la deuxième pattes (2, 5), sous la zone coudée (15) chevauchent la première patte (2), un élément de fixation (22) étant prévu pour le maintien sur la première ou la deuxième patte adjacente (2, 5), l'élément de fixation (22) présentant une partie de fixation (10) qui est conçue de la même manière que la partie de fixation (10) de la deuxième traverse (6) et qui peut être fixée à la partie de fixation de la première patte.

10. Module à rouleaux destiné à être fixé latéralement à une chaîne de guidage d'énergie comprenant des brins de pattes (1) constituées de premières pattes (2) opposées, au moins certaines des pattes opposées (2) étant reliées entre elles par l'intermédiaire de traverses (3), le module à rouleaux comprenant une deuxième patte (5), qui convient comme patte d'une chaîne de guidage d'énergie constituée de deux brins de pattes, et un rouleau (7) monté dans un support (11), le support (11) étant relié à la deuxième patte (5) et présentant un moyen de fixation pour la fixation amovible à une première patte (2) opposée à la première patte (2) de la chaîne de guidage d'énergie, et le rouleau (7) dépassant de la deuxième patte (5) dans une direction parallèle à la deuxième patte (5), **caractérisé en ce que** le support (11) est réalisé sous la forme d'un étrier, avec deux âmes (12, 13) parallèles à la deuxième patte (5), entre lesquelles est disposé le rouleau (7) et qui sont reliées l'une à l'autre dans une première région d'extrémité par une âme de liaison (14).

11. Module à rouleaux destiné à être fixé latéralement à une chaîne de guidage d'énergie comprenant des brins de pattes (1) constituées de premières pattes (2) opposées, au moins certaines des pattes opposées (2) étant reliées entre elles par l'intermédiaire de traverses (3), le module à rouleaux comprenant une deuxième patte (5), qui convient comme patte d'une chaîne de guidage d'énergie constituée de deux brins de pattes, et un rouleau (7) monté dans un support (11), le support (11) étant relié à la deuxième patte (5) et présentant un moyen de fixation pour la fixation amovible à une première patte (2) opposée à la première patte (2) de la chaîne de guidage d'énergie, et le rouleau (7) dépassant de la deuxième patte (5) dans une direction parallèle à la deuxième patte (5), le module à rouleaux ayant une traverse (6) qui s'étend essentiellement transversalement par rapport à la deuxième patte (5) et qui est droite et est reliée dans une première région d'extrémité à la deuxième patte (5) et ayant dans une deuxième région d'extrémité une partie de fixation (10) pour la fixation détachable à une première patte (2) de la chaîne de guidage d'énergie, **caractérisé en ce que** le support (11) présente deux âmes parallèles (12, 13) qui s'étendent dans la direction verticale de la deuxième patte (5), entre lesquelles est disposé le rouleau (7) et qui s'appuient sur la traverse (6) dans une première zone d'extrémité dirigée vers l'âme transversale (6) et qui présentent, dans une deuxième zone d'extrémité, une zone coudée vers l'extérieur (15, 16) pour l'appui contre le côté des première et deuxième pattes (2, 5) sur lequel le rouleau (7) fait saillie.

12. Module à rouleaux selon la revendication 11, **caractérisé en ce que** la traverse (6) présente, dans sa première région d'extrémité, une partie de fixation (10) qui est reliée de manière détachable à une partie de fixation sur la deuxième patte (5).

13. Module à rouleaux selon la revendication 11, **caractérisé en ce que** le rouleau (7) est monté dans un support (11) qui est supporté intérieurement sur la traverse (6) et qui est relié à la deuxième patte (5) et qui a des moyens de fixation pour la connexion à une première patte (2) opposée d'une chaîne de guidage d'énergie.

14. Module à rouleaux selon la revendication 10 ou l'une des revendications 11 à 13,
**caractérisé en ce que** le support (11) est réalisé sous la forme d'un étrier, avec deux âmes latérales (12, 13) parallèles à la deuxième patte (5), qui sont reliées entre elles dans une première zone d'extrémité par une âme de liaison (14) et présentent une zone coudée vers l'extérieur (15), 16) dans une deuxième région d'extrémité, l'âme de liaison (14) venant en butée contre la face intérieure de la traverse (6) et les régions coudées (15, 16) étant conçues pour venir en butée contre le côté des première et deuxième pattes (2, 5) sur lequel le rouleau (7) fait saillie.

15. Module à rouleaux selon la revendication 10 ou l'une quelconque des revendications 11 à 13, **caractérisé en ce que** les zones coudées (15, 16) comprennent des moyens de fixation pour la fixation sur le côté des première et deuxième pattes (2, 5) où le rouleau (7) fait saillie.
